Europäisches Patentamt

European Patent Office

Office européen des brevets

(11) Veröffentlichungsnummer: **0 126 708**
**A2**

(12) # EUROPÄISCHE PATENTANMELDUNG

(21) Anmeldenummer: 84730049.8

(51) Int. Cl.³: **F 16 N 29/00, F 16 N 7/38**

(22) Anmeldetag: 11.05.84

(30) Priorität: 18.05.83 DE 8314995 U

(43) Veröffentlichungstag der Anmeldung: 28.11.84
Patentblatt 84/48

(84) Benannte Vertragsstaaten: **CH DE FR GB IT LI**

(71) Anmelder: **Willy Vogel AG, Motzener Strasse 35/37, D-1000 Berlin 48 (DE)**

(72) Erfinder: **Meuer, Johannes, Dipl.-Ing., Rauschener Allee 6, D-1000 Berlin 19 (DE)**
Erfinder: **Nemack, Christian, Dipl.-Ing., Karwendelstrasse 29d, D-1000 Berlin 45 (DE)**
Erfinder: **Todtenhaupt, Dieter, Ing. grad., Hohenzollerndamm 24, D-1000 Berlin 31 (DE)**

(74) Vertreter: **Böning, Manfred, Dr. Ing. et al, Patentanwälte Dipl.-Ing. Dieter Jander Dr. Ing. Manfred Böning Kurfürstendamm 66, D-1000 Berlin 15 (DE)**

(54) **Vorrichtung zur Funktionskontrolle von Zentralschmieranlagen.**

(57) Bei einer Vorrichtung zur Funktionskontrolle von Zentralschmieranlagen mit zwei elektrisch leitenden, in einen Signalkreis integrierten Bauteilen (8, 9) dient zur elektrischen Verbindung dieser Bauteile (8, 9) ein Kontaktkolben (18). Der Kontaktkolben (18) ist spielfrei in einer Bohrung (17) eines der Bauteile (8, 9) geführt. Er weist einen Dichtungsabschnitt (19) auf, der in der Arbeitsstellung der Vorrichtung durch zwei Stichkanäle (24, 26) und einen Verbindungskanal (25) überbrückt wird. Der eine (24) der Stichkanäle (24, 26) mündet an einer Stelle in die zur Führung des Kontaktkolbens (18) dienende Bohrung (17), die so weit von der Auslassöffnung eines Durchflusskanals (22) entfernt ist, dass erst dann Schmiermittel durch die Vorrichtung strömen kann, wenn zwischen dem einen Bauteil (9) und dem Kontaktkolben (18) ein vergleichsweise grosser Abstand hergestellt ist.

Fig. 1

ACTORUM AG

## Vorrichtung zur Funktionskontrolle von Zentralschmieranlagen

Die Erfindung betrifft eine Vorrichtung zur Funktionskontrolle von Zentralschmieranlagen mit mindestens zwei in einem Gehäuse angeordneten elektrisch leitenden, in einen Signalkreis integrierten Bauteilen, die bei nicht strömendem Schmiermittel durch einen axial verschiebbar in einer Bohrung eines der Bauteile angeordneten Kontaktkolben elektrisch miteinander verbunden sind, der in der Ruhestellung mit einer Stirnfläche gegen einen Rand anliegt, welcher das Ende eines in einem der Bauteile angeordneten, mit einem Einlaß für das Schmiermittel in Verbindung stehenden Durchflußkanal umgibt, und die bei strömendem, die Stirnfläche des Kontaktkolbens vom Rand des Durchflußkanals abhebendem Schmiermittel elektrisch voneinander getrennt sind.

Aus der DE-OS 23 21 729 ist eine Vorrichtung der vorstehenden Art mit einem zylindrischen Kontaktkolben bekannt, der mit Spiel in einer Bohrung eines der Bauteile angeordnet ist, die gleichzeitig einen Durchflußkanal für das Schmiermittel bildet. Zur Abdichtung des mit dem Einlaß für das Schmiermittel in Verbindung stehenden Durchflußkanales dient bei dieser Vorrichtung einzig und allein ein schmaler Ringbereich an der Stirnfläche des Kontaktkolbens. Die bekannte Vorrichtung vermag aus mehreren Gründen nicht voll zu befriedigen. So ist bei ihr keine Gewähr dafür gegeben, daß der Kontaktkolben das Ende des von ihm zu verschliessenden Durchflußkanales einwandfrei abdichtet. Insbesondere bei sehr kleinen Fördermengen muß damit gerechnet werden, daß das Schmiermittel am Kontaktkolben vorbeischleicht, ohne ihn um einen Betrag zu verlagern, der hinreichend groß ist, um ein einwandfreies Signal zu liefern. Voraussetzung für eine störungsfreie und gesicherte Signalgabe ist eine stabile Unterbrechung des Kontaktes. Diese stellt sich nicht ein, wenn der Kontaktkolben im Falle des Auftretens von Schmiermittelimpulsen gewissermassen zittrige Hin- und Herbewegungen ausführt. Nachteilig ist darüber hinaus, daß eines der zum Signalkreis gehörenden Bauteile von einem Schraubanschluß für eine Rohrleitung gebildet wird. Die im Signalkreis anwendbaren Spannungen können folglich nur klein sein und als solche Fehlanzeigen fördern.

Der Erfindung liegt die Aufgabe zugrunde, eine Vorrichtung der in Betracht gezogenen Art zu schaffen, die bei einfachem Aufbau auch bei kleinen Förderleistungen eine problemlose und zuverlässige Funktionskontrolle von Zentralschmieranlagen zuläßt. Diese Aufgabe wird erfindungsgemäß dadurch gelöst, daß der Kontaktkolben einen spielfrei in der für ihn vorgesehenen Bohrung geführten Dichtungsabschnitt aufweist, daß in die Bohrung ein Stichkanal mündet, dessen Eintrittsöffnung in der Ruhestellung durch den Dichtungsabschnitt des Kontaktkolbens verschlossen, in der Arbeitsstellung dagegen freigegeben ist, und daß der Stichkanal mit dem Auslaß der Vorrichtung in Verbindung steht.

Als besonders vorteilhaft erweist es sich dabei, wenn die zum Signalkreis gehörenden Bauteile und der Kontaktkolben nach außen abgekapselt und elektrisch isoliert gegenüber dem aus Metall bestehenden Gehäuse in diesem gelagert sind.

Weitere Einzelheiten und Merkmale der erfindungsgemässen Vorrichtung ergeben sich aus den Unteransprüchen und der nachfolgenden Beschreibung eines in der beigefügten Zeichnung dargestellten Ausführungsbeispieles. Es zeigen:

Figur 1 einen Schnitt durch eine Vorrichtung;

Figur 2 die Form der von der Vorrichtung gemäß Figur 1 gelieferten Signale und

Figur 3 einen abgewandelten Kontaktkolben für eine Vorrichtung gemäß Figur 1.

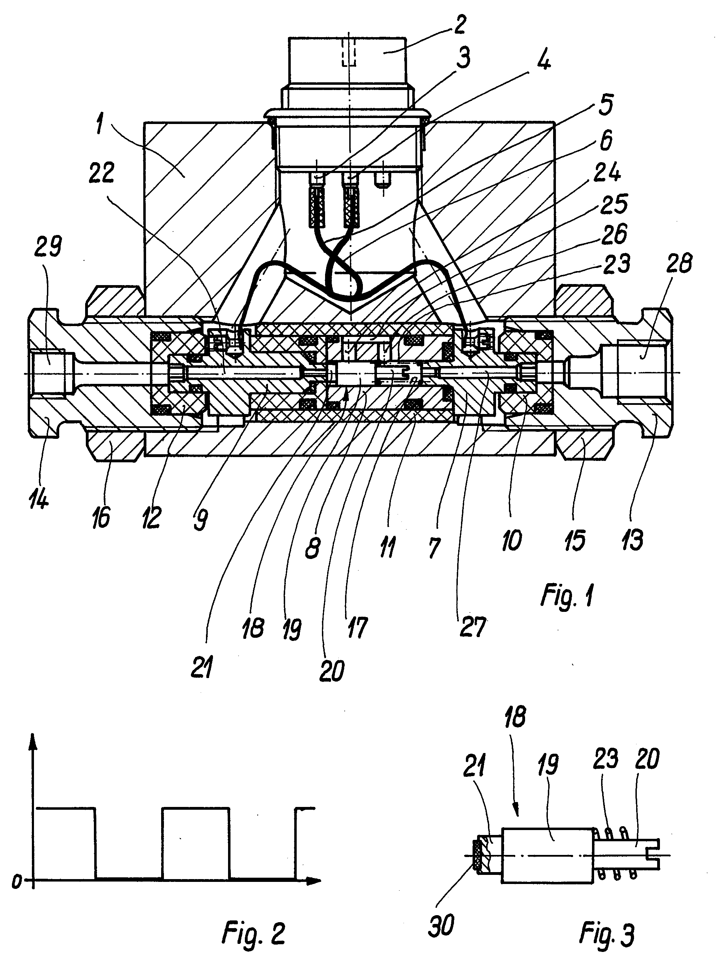

In Figur 1 ist 1 ein metallisches Gehäuse, in dem eine Flanschsteckdose 2 befestigt ist. Mit den Anschlußkontakten 3 und 4 sind über isolierte Leitungen 5 und 6 elektrisch leitende Bauteile 7, 8 und 9 verbunden, die von Isolierstücken 10, 11 und 12 gehalten werden. Durch die isolierte und abgekapselte Anordnung der Bauteile 7, 8 und 9 läßt sich die Höhe der zum Betreiben des Signalkreises verwendeten Spannung in weiten Grenzen den jeweiligen Anforderungen entsprechend variieren, ohne daß die Arbeitssicherheit beeinträchtigt wird. 13 und 14 sind in das Gehäuse 1 geschraubte metallische Anschlußstücke, zu deren Lagesicherung Muttern 15 und 16 dienen. In einer Bohrung 17 des Bauteiles 8 ist ein allgemein mit 18 bezeichneter Kontaktkolben gelagert. Der Kontaktkolben 18 besitzt einen Dichtungsabschnitt 19 und zwei sich hieran anschliessende Vorsprünge 20 und 21. Der Vorsprung 21 liegt mit seiner Stirnfläche gegen den ringförmigen Rand des Endes eines Durchflußkanales 22 an. Er wird in der Ruhestellung der Vorrichtung durch eine Feder 23 in dieser Lage gehalten, die sich einerseits am Dichtungsabschnitt 19 und andererseits an der Stirnseite des Bauteiles 7 abstützt. 24 ist ein Stichkanal, der über einen Verbindungskanal 25 mit einem weiteren Stichkanal 26 in Verbindung steht. Der Stichkanal 26 mündet in die Bohrung 17, die über einen Durchflußkanal 27 mit einem Auslaß 28 der Vorrichtung verbunden ist. Der Einlaß der Vorrichtung ist mit 29 bezeichnet.

Die beschriebene Vorrichtung arbeitet wie folgt:

In Figur 1 sind die einzelnen Teile der Vorrichtung in der Ruhestellung gezeigt, d.h. es fließt kein Schmiermittelstrom und die Anschlußkontakte 3 und 4 stehen über die Leitungen 5 und 6 sowie die Bauteile 7, 8, 9 und den Kontaktkolben 18 in Verbindung, d.h. es kann ein elektrischer Strom fliessen. Wird der Vorrichtung über den Einlaß 29 Schmiermittel zugeführt, so fließt dieses durch den Durchflußkanal 22 in Richtung des Kontaktkolbens 18. Durch den Schmiermitteldruck wird der Kontaktkolben 18 gegen die Wirkung der Feder 23 in Fig. 1 nach rechts bewegt. Am Anfang der Bewegung liegt der linke Teil des Dichtungsabschnittes 19 dichtend gegen die Innenwand der Bohrung 17 an. Erst nachdem eine bestimmte Schmiermittelmenge in die Bohrung 17 eingetreten ist, gibt das Ende des Dichtungsabschnittes 19 den Zufluß zum Stichkanal 24 frei, und das Schmiermittel kann durch den Stichkanal 24 den Verbindungskanal 25, den Stichkanal 26 und den Durchflußkanal 27 zum Auslaß 28 gelangen. Der Vorsprung 20, der an seinem Ende mit einem Querschlitz versehen ist, verhindert eine Abdichtung des Stichkanales 26 durch den Dichtungsabschnitt 19 des Kontaktkolbens 18.

Der Kontaktkolben 18 muß mit anderen Worten bevor Schmiermittel fliessen kann, erst einen bestimmten Hub zurücklegen. Aufgrund dieses Umstandes ist eine saubere Unterbrechung des Kontaktes zwischen dem Bauteil 9 und dem Kontaktkolben 18 gewährleistet. Ein Verkanten des Kontaktkolbens 18 ist nicht möglich und selbst Pendelbewegungen des Kontaktkolbens 18 um die Position, in der sein Dichtungsabschnitt 19 den Stichkanal 24 gerade frei gibt, wirken sich nicht störend aus, da diese Pendelbewegungen kleiner sind als der Abstand zwischen der Stirnfläche des Vorsprunges 21 und dem dieser zugewandten ringförmigen Rand des Bauteiles 9.

Sobald der Kontakt zwischen dem Kontaktkolben 18 und dem Bauteil 9 aufgehoben ist, kann kein elektrischer Strom mehr fliessen.

Aufgrund der getroffenen Anordnung erhält man Rechtecksignale der in Figur 2 dargestellten Art.

In Figur 3 ist ein Kontaktkolben 18 gezeigt, dessen Vorsprung 21 an seiner Stirnfläche mit einer elastischen, elektrisch leitenden Dichtung 30

- 6 -

0126708

versehen ist. Die Dichtung 30 erlaubt es, bei der Herstellung der Stirnfläche des Vorsprunges 21 größere Fertigungstoleranzen zuzulassen. Außerdem erhöht sie die Unempfindlichkeit der Vorrichtung gegenüber Einflüssen, die von kleinen im Schmiermittel enthaltenen Schmutzpartikeln ausgehen können.

Patentansprüche :

1. Vorrichtung zur Funktionskontrolle von Zentralschmieranlagen mit mindestens zwei in einem Gehäuse (1) angeordneten elektrisch leitenden, in einen Signalkreis integrierten Bauteilen (8,9), die bei nicht strömendem Schmiermittel durch einen axial verschiebbar in einer Bohrung (17) eines (8) der Bauteile (8,9) angeordneten Kontaktkolben (18) elektrisch miteinander verbunden sind, der in der Ruhestellung mit einer Stirnfläche gegen einen Rand anliegt, welcher das Ende eines in einem (9) der Bauteile (8,9) angeordneten, mit einem Einlaß (29) für das Schmiermittel in Verbindung stehenden Durchflußkanal (22) umgibt, und die bei strömendem, die Stirnfläche des Kontaktkolbens (18) vom Rand des Durchflußkanals (22) abhebendem Schmiermittel elektrisch voneinander getrennt sind, dadurch gekennzeichnet, daß der Kontaktkolben (18) einen spielfrei in der für ihn vorgesehenen Bohrung (17) geführten Dichtungsabschnitt (19) aufweist, daß in die Bohrung (17) ein Stichkanal (24) mündet, dessen Eintrittsöffnung in der Ruhestellung durch den Dichtungsabschnitt (19) des Kontaktkolbens (18) verschlossen, in der Arbeitsstellung dagegen freigegeben ist, und daß der Stichkanal (24) mit dem Auslaß (28) der Vorrichtung in Verbindung steht.

2. Vorrichtung nach Anspruch 1, dadurch gekennzeichnet, daß die zum Signalkreis gehörenden Bauteile (8,9) und der Kontaktkolben (18) nach außen abgekapsel und elektrisch isoliert gegenüber dem aus Metall bestehenden Gehäuse (1) in diesem gelagert sind.

3. Vorrichtung nach Anspruch 1 oder 2, dadurch gekennzeichnet, daß der Kontaktkolben (18) einen den Dichtungsabschnitt (19) bildenden Hauptteil und sich hieran anschliessende Vorsprünge (20,21) aufweist.

4. Vorrichtung nach Anspruch 3, dadurch gekennzeichnet, daß der eine Vorsprung (21) in der Ruhestellung durch eine Feder (23) mit seiner Stirnfläche gegen den Rand des Endes des Durchflußkanals (22) gedrückt wird, während der andere Vorsprung (20) in der Arbeitsstellung einen die Verschiebung des Kontaktkolbens (18) begrenzenden Anschlag bildet.

5. Vorrichtung nach einem der Ansprüche 1 bis 4, dadurch gekennzeichnet, daß der Dichtungsabschnitt (19) des Kontaktkolbens (18) in der Arbeitsstellung durch zwei Stichkanäle (24,26) und einen Verbindungskanal (25) überbrückt ist.

6. Vorrichtung nach einem der Ansprüche 1 bis 5, dadurch gekennzeichnet, daß die elektrisch leitenden Bauteile (7,8,9) mit geraden Durchflußkanälen versehen sind, deren Achsen mit der Achse der Bohrung (17) für den Kontaktkolben (18) fluchten.

7. Vorrichtung nach einem der Ansprüche 1 bis 6, dadurch gekennzeichnet, daß an der Stirnfläche des Kontaktkolbens (18) eine elastische, elektrisch leitende Dichtung (30) angeordnet ist.

Fig. 1

Fig. 2

Fig. 3